# EUROPEAN PATENT SPECIFICATION

(11) **EP 0 902 521 B1**
(45) Date of publication and mention of the grant of the patent: **31.12.2008**
(21) Application number: 98117160.6
(22) Date of filing: 10.09.1998
(51) Int. Cl.: H02J 7/00, G07F 7/00

(54) **Battery rental system**
System zum Vermieten von Batterien
Système de location de batteries

(30) Priority: 15.09.1997 JP 26938197; 25.06.1998 JP 17911198
(43) Date of publication of application: 17.03.1999
(73) Proprietor: HONDA GIKEN KOGYO KABUSHIKI KAISHA, Minato-ku, Tokyo (JP)
(72) Inventor: Hatanaka, Kaoru, Wako-shi, Saitama (JP)
(74) Representative: Liska, Horst

(56) References cited:
- EP-A- 0 694 885
- WO-A-85/01812
- WO-A-97/10638
- FR-A- 2 732 144
- US-A- 5 327 066
- US-A- 5 349 535
- PATENT ABSTRACTS OF JAPAN vol. 1997, no. 10, 31 October 1997 (1997-10-31) & JP 09 153376 A (RICOH CO LTD), 10 June 1997 (1997-06-10) -& US 5 694 019 A (UCHIDA SHIROU ET AL) 2 December 1997 (1997-12-02)
- PATENT ABSTRACTS OF JAPAN vol. 017, no. 680 (E-1476), 14 December 1993 (1993-12-14) & JP 05 227669 A (TATSUNO CO LTD), 3 September 1993 (1993-09-03)

## Description

This invention relates to a battery rental system for batteries to be carried by electrically-driven vehicles.

A battery charging apparatus for an electric automobile is disclosed in the official gazette of Japanese Patent Laid-Open Application No. Heisei 5-227669.

In this battery charging apparatus for an electric automobile, an IC card is used upon charging of a battery for an electric automobile.

The IC card has provided thereon a region for recording a history of driving information in the past regarding a battery and so forth and another region for recording battery unique information of a battery carried corresponding to the electric automobile.

The battery unique information includes, for example, a type, a time of production, charging-discharging characteristics and so forth of the battery.

The IC card plays a role of a key upon charging at a service stand or records also an identification number or the like used for settlement of rates.

In a conventional electric automobile, in order for a user to enjoy the service of charging of a battery or the like, an IC card is required, and a service stand or a battery charging apparatus requires an IC card reader-writer for reading recorded information of an IC card.

Further, as a history of use of a battery, for example, the numbers of times of charging and discharging operations or the like, only the numbers of times of those charging and discharging operations in which an IC card is used are stored.

In short, in such a case that a battery is charged using a charger of a user, since the history of the charging or discharging of the battery is not stored into an IC card, it may possibly occur that the timing for maintenance of the battery cannot be grasped accurately.

JP 09 153376 A shows a battery rental system; user data are stored on an ID card which is separate from the battery.

WO 85/01812 discloses a credit card rental machine for battery powered items, specifically chess games. When returning said item to the rental machine, the identity of the item is checked.

US 5 349 535 shows a battery recharging system, in accordance with the preamble of claim 1 wherein a user vehicle ID is stored in a battery-side storage and communication unit.

Consequently, there is a problem that, on both of the side which provides service and the side which is provided service, a cost and time are required for the service, or appropriate maintenance of a battery is difficult to perform.

In order to solve the problem described above, there is provided a battery rental system as set forth in claim 1.

Since each of the batteries stores the identification number of the battery and the identification number of a user rental person and the used amount of a returned battery, operation to input a rental ID of a rental person or insert an IC card (or ID card) or the like when a battery is returned or lent is not required, and common use of a plurality of batteries by a rental person can be performed smoothly.

If the battery ID is checked, then the battery exchanging device is able to identify the specific individual battery with its specific characteristic, which may be dependent by aging processes and other individual differences between the batteries, so that the recharging process can inter alia be dependent on the unique use of history of the specific battery itself, so that maintenance timing for the batteries can be grasped accurately.

Since each of the batteries for rental has the readable and writable storage element built therein and includes the communication means, when batteries are returned from and lent to a plurality of rental persons, the communication means of the batteries can individually access the central control apparatus to control the stored information, and consequently, the returning and lending operations can be performed smoothly.

Since the communication means is driven by power supplied from the battery exchanging apparatus, even if the voltage of the battery itself is low, operation of the communication can be enabled to enhance the reliability of operation, and the reliability of information from the communication means can be enhanced.

The battery rental system is characterized in that each of the batteries for rental includes a temperature sensor for detecting a temperature of the battery, and change-over means for changing over and outputting an output signal of the temperature sensor and an output signal of the communication means.

Since each of the batteries for rental includes the change-over means for changing over and outputting the output signal of the temperature sensor and the output signal of the communication means, terminals of the battery can be used commonly and the number of terminals of the battery can be reduced.

Since each of the batteries for rental in the battery rental system stores the use history, the central control apparatus can store the use amount of the returned battery rapidly, and besides the central control apparatus can detect the number of charging and discharging operations and the number of uses of each of the batteries and can make the most of it for maintenance of the battery.

Further, also the history of a battery for rental can be grasped accurately when the battery for rental is charged by a user of the same using a charger of the user.

Since this allows storage of a history of charging and discharging of a battery without using an IC card also in a battery rental system which utilizes an IC card, it can be applied to both of the two cases.

In the following, an embodiment of the present invention is described with reference to the accompanying drawings.
FIG. 1 is a simple schematic view of a battery rental system according to the present invention.
FIG. 2 is a simple schematic view of an unmanned automatic battery rental apparatus (battery exchanging apparatus).
FIG. 3 is a schematic block diagram of essential part of the unmanned automatic battery rental apparatus (battery exchanging apparatus).
FIG. 4 is a block schematic view explaining a condition wherein a battery is accommodated into an accommodation section of the unmanned automatic battery rental apparatus (battery exchanging apparatus).
FIG. 5 is a simple operation flow diagram of the unmanned automatic battery rental apparatus (battery exchanging apparatus).
FIG. 6 is a simple operation flow diagram of the unmanned automatic battery rental apparatus (battery exchanging apparatus).
FIG. 7 is a simple operation flow diagram of the unmanned automatic battery rental apparatus (battery exchanging apparatus).
FIG. 8 is a simple schematic view of a battery for an electrically-operated vehicle.
FIG. 9 is a simple schematic view of a transmission-reception section of the battery of FIG. 8.
FIG. 10 is a simple schematic view of a battery for an electrically-operated vehicle.

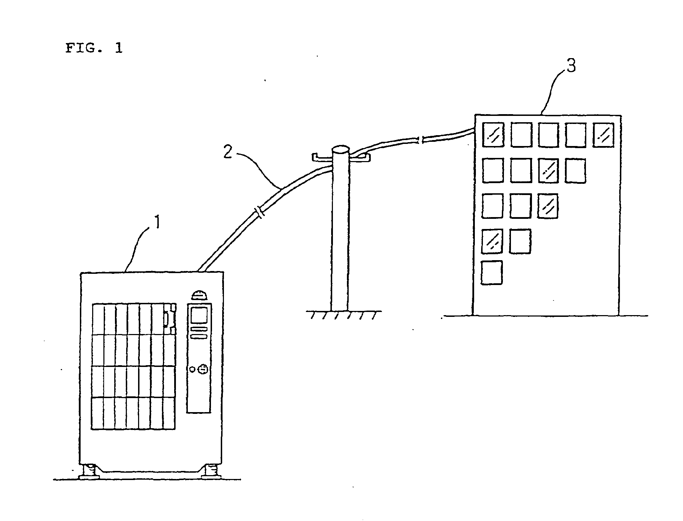

### To Fig. 1.

The battery rental system is composed of an unmanned automatic battery rental apparatus (battery exchanging apparatus) 1 and a central control apparatus 3 which effects centralized control of the unmanned automatic battery rental apparatus 1 over a communication line 2 using a network.

The battery rental system includes a plurality of unmanned automatic battery rental apparatus 1 arranged in many districts based on the possessed number of electrically operated vehicles such as motor-assist bicycles, the situations of the districts, the travelling distances of electrically-operated vehicles and so forth so as to provide a user (rental person) with facilities, and makes a contract, when a user makes use of the present system, for example, with a company of the battery rental system regarding utilization of the battery rental system directly or through an agent or the like.

The system may be such that a contract of rental or lease of an electrically-operated vehicle may be made with the company of the battery rental system.

A user receives setting of a single user registration number (rental ID) personally for the user or for a family, a company or the like from the company of the battery rental system, stores a battery identification number into the central control apparatus in a corresponding relationship to the rental ID and can enjoy, after the battery is lent, a rental service of a battery making use of the unmanned automatic battery rental apparatus 1.

When the user makes use of the unmanned automatic battery rental apparatus 1, a battery 7 is inserted into a battery returning accommodation section 15 of the unmanned automatic battery rental apparatus 1 so that an identification number of the battery may be recognized by the unmanned automatic battery rental apparatus 1.

The unmanned automatic battery rental apparatus 1 recognizes a battery which has an identification number as a battery for rental and informs the user of a procedure of utilization.

Then, the unmanned automatic battery rental apparatus 1 informs, when returning of the battery used is confirmed, the user of an accommodated position of a battery charged up fully or having an available capacity.

Thereafter, the unmanned automatic battery rental apparatus 1 reads the identification number and the remaining amount of the battery to be serviced for rental as well as the identification number and unique information (remaining amount, remaining amount when lent, remaining amount at present), the number of times of charging/discharging operations, the number of times of use and so forth) of the used battery returned, calculates a toll subtracting the remaining amount at present from the remaining amount when lent, writes the battery remaining amount when lent into the battery to be lent then so as to be stored and reports the battery remaining amount to the user, and then lends the battery to the user.

Further, the unmanned automatic battery rental apparatus 1 bidirectionally transmits data of a history of the returned battery such as the return date and hour, the toll, the number of times of charging/discharging operations, the number of times of use and so forth, the battery identification number, the rental date and hour, the identification number, the remaining amount when lent and so forth of the lent battery to the central control apparatus 3 over the communication line 2 such as a telephone line or a private line by transmission means such as a modem, or communication means 7T provided in the battery is rendered operative to transmit such data to the central control apparatus 3 over the communication line 2 through the unmanned automatic battery rental apparatus 1.

The central control apparatus 3 connects to the plurality of unmanned automatic battery rental apparatus 1 in the various districts and effects centralized control by means of a computer so that rental information of users and unique information of batteries is controlled from the unmanned automatic battery rental apparatus 1.

Particularly, as rental person data, the identification number of the battery lent at present is stored, and if the battery of the identification number is returned to an unmanned automatic battery rental apparatus 1, then the used amount is stored, and the identification number of the battery lent newly and the battery remaining amount then are stored. As the unique information of the battery, the number of times of charging and discharging operations, the number of times of use and so forth are stored.

The central control apparatus 3 informs a battery maintenance section of the company of the battery rental system of the data of the battery, informs a user of a toll after each fixed interval of time and effects collection of the toll through a bank or the like. Thus, since each of the batteries stores the use history of the battery itself, even in a battery rental system which utilized an ID card, maintenance timing for the batteries can be grasped accurately.

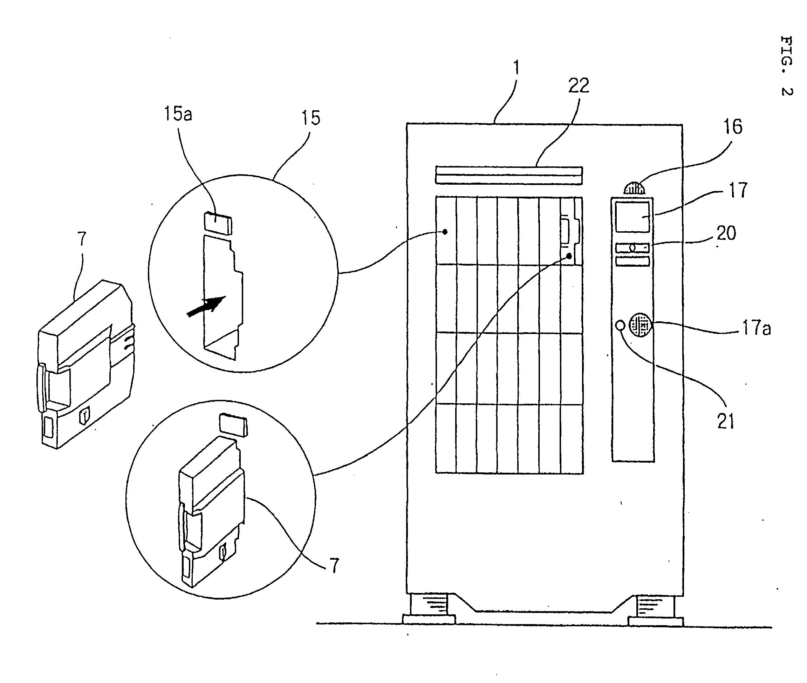

### To Fig. 2.

The unmanned automatic battery rental apparatus 1 includes batteries 7 for rental, accommodation sections 15, accommodation section indication lamps 15a, an alarming apparatus 16, a display unit 17, an audible indicator 17a, and an illumination apparatus 22.

The unmanned automatic battery rental apparatus 1 operates when a person comes, and includes a person detection sensor 20 which gives a greeting or the like.

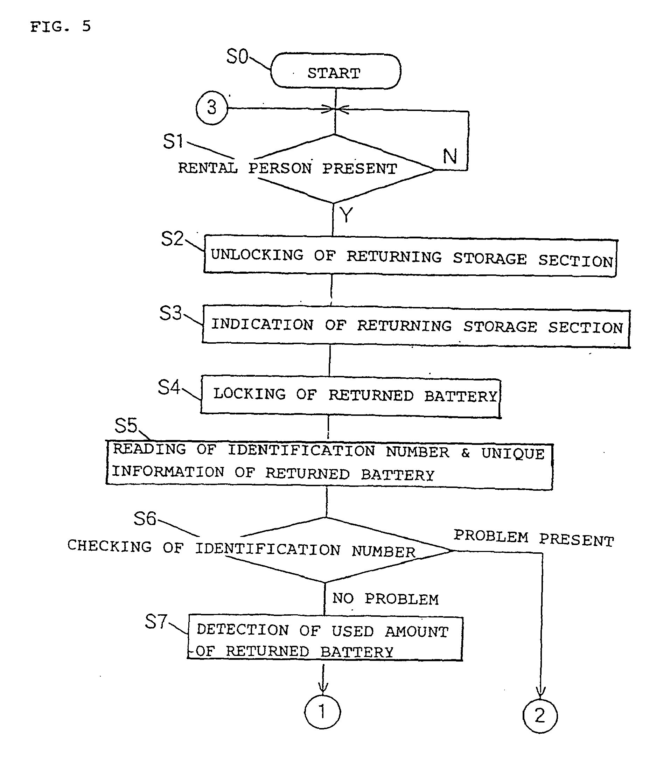

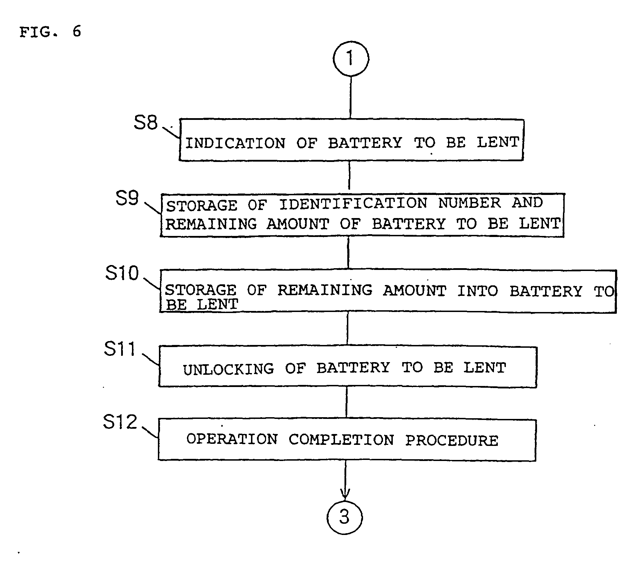

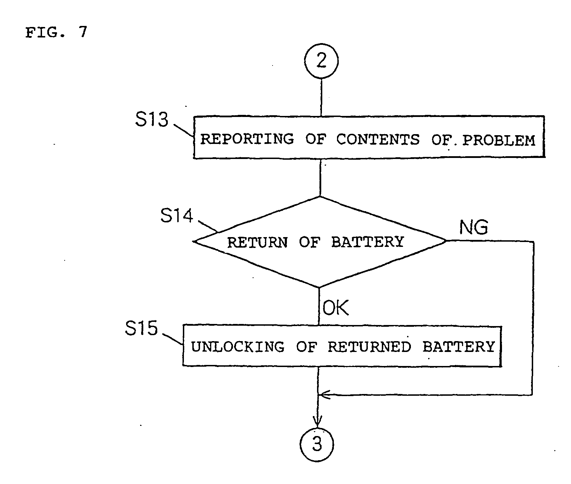

Operation of the unmanned automatic battery rental apparatus 1 is described with reference to FIGS. 5 to 7.

If a person stands in front of the unmanned automatic battery rental apparatus 1, then the person detection sensor 20 detects this (status S1), unlocks an accommodation section 15 to allow delivery/acceptance (status S2), and starts guidance by means of the display unit 17 and the audible indicator 17a (status S3).

For example, such aural guidance as "Welcome! Please insert the used battery into the first bay (or accommodation section)" is performed.

The unmanned automatic battery rental apparatus 1 includes a battery returning accommodation section 15, and if the user inserts a battery into the accommodation section 15, then it locks the battery 7 (status S4), reads the identification number and unique information of the battery 7 returned (status S5), effects checking of the battery identification number (status S6), and investigates whether or not a new battery can be lent.

The unmanned automatic battery rental apparatus 1 confirms that the battery 7 used is returned into the returning accommodation section 15 and a lock pin 12 provided for the battery 7 is inserted to a position to be locked and then the lock pin 12 is locked.

When there is a problem in regard to the identification number, the unmanned automatic battery rental apparatus 1 indicates the reason why the use is impossible using the display unit 17 and the audible indicator 17a (status S13), and discriminates whether or not the battery 7 returned should be returned back to the user without providing a rental service of a battery (status S14).

If the battery 7 is a stolen battery or the charge due is in arrears, it is kept in the locked condition by the lock pin 12, but where the battery 7 is a battery having no connection with the rental, the locked condition of the battery is cancelled (status S15), and the battery is returned from the accommodation section 15.

If it is determined from the identification number that the battery 7 is a battery for rental having no problem (for example, that the battery 7 is not a stolen battery, that there is no arrear of the toll), then the amount of use of the returned battery 7 is checked and detected (status S7), and further, a procedure for utilization is indicated to the user by means of the display unit 17 and the audible indicator 17a.

Further, the remaining amount when lent and the remaining amount at present of the used battery 7 returned are read out from the storage means of the battery or the central control apparatus 3, and the used amount is calculated. Then, the toll, the latest rental date and hour and so forth are indicated with the audible indicator 17a and the display unit 17, and the identification number and the toll of the returned battery are stored.

The unmanned automatic battery rental apparatus 1 reports, by means of the display unit 17 and the audible indicator 17a, the accommodation section 15 of that one of the batteries 7 arranged in a plurality of stages which has been charged up fully so that it can be provided for the rental service or which has a remaining amount of 70 % or more and can be used (status S8).

For example, aural guidance of "The rate of electricity consumed by you is 500 yen. Please take the battery of the second bay (or accommodation section)." is performed.

Further, the battery identification number and the battery remaining amount of the battery 7 to be lent are stored (status S9).

The battery remaining amount of the battery 7 to be lent is stored into the battery 7 (status S10), and the lock pin 12 provided for the battery 7 to be provided for the rental service is unlocked (status S11) so that the battery 7 can be taken out readily by the user. It is to be noted that the status S8 may be provided immediately after the status S11.

After the battery 7 is taken out, for example, such oral guidance of operation completion that "Thank you for your utilization." is provided (status S12).

The unmanned automatic battery rental apparatus 1 stores also unique electric data information for charging such as the return date and hour, the toll, the numbers of charging times and so forth of the used battery 7 returned, and transmits the data to the central control apparatus 3 over the communication line 2. Further, the unmanned automatic battery rental apparatus 1 may transmit the amount of use or the remaining amount of the battery 7.

In this instance, where the battery itself includes communication means, power may be supplied from the unmanned automatic battery rental apparatus 1 to the communication means in the battery to effect communication.

Further, the unmanned automatic battery rental apparatus 1 receives information of an electric processing method corresponding to the data information from the central control apparatus 3, performs electric processing in accordance with an information instruction of the received information and transmits data information of a result of the electric processing performed to the central control apparatus 3 over the communication line 2 again.

Further, the unmanned automatic battery rental apparatus 1 includes the alarming apparatus 16 so that it issues alarming sound when some trouble occurs, and further, upon emergency, the unmanned automatic battery rental apparatus 1 can communicate with the location of the central control apparatus 3 or the company of the battery rental system in contract by means of an interphone call switch 21.

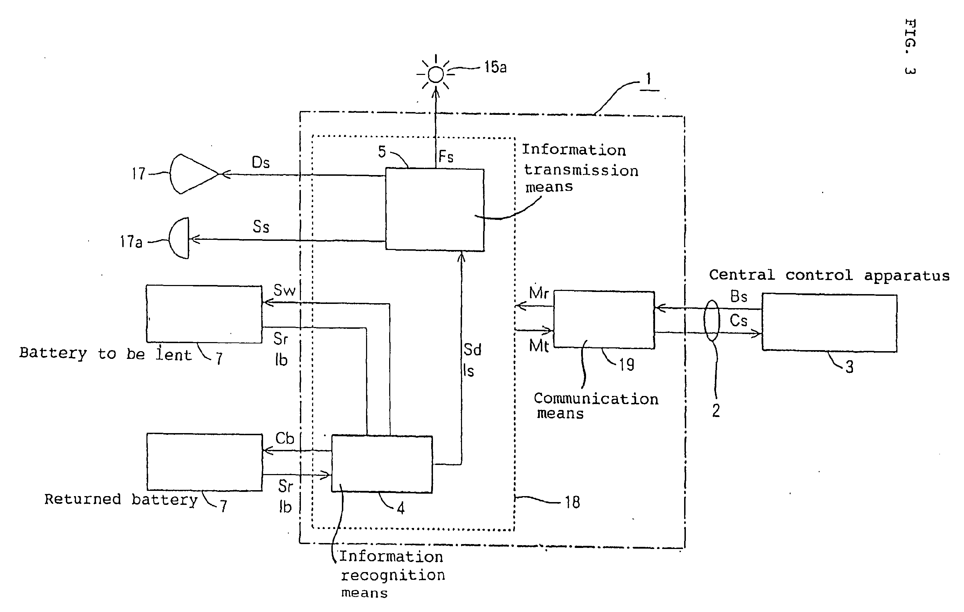

### To Fig. 3.

The unmanned automatic battery rental apparatus 1 includes control means 18 and communication means 19. The control means 18 includes information recognition means 4 and information transmission means 5.

The information recognition means 4 is a data communication apparatus of the contacting type or the non-contacting type, and stored information of a battery 7 can be accessed thereby.

The information recognition means 4 bidirectionally transmits information to and from the communication means 7T in the battery, performs checking of the battery identification number by means of the reader of the information recognition means 4, and investigates whether or not the battery 7 is in a normal rental condition.

The information recognition means 4 reads, if it is discriminated that the battery 7 is in a normal rental condition, a read signal Sr such as the rental ID of the user, the year, month, day and hour of the latest rental, the updating date, the present remaining amount and so forth stored in the battery 7, and a recognition signal Sd of the information and the data to the information transmission means 5.

Further, the information recognition means 4 writes the year, month, day and hour of the latest rental, the battery remaining amount and so forth of the lent battery 7 into the battery to be lent using a write signal Sw, and supplies a recognition signal Sd of the information and the data to the information transmission means 5.

Before the battery is lent, the identification number of the battery, the battery remaining amount, other histories of the battery and so forth are read as read signals Sr, Ib by the reader, and recognition signals Sd, Is are supplied to the information transmission means 5.

The information transmission means 5 supplies signals Ds, Ss and Fs for controlling the display unit 17 such as an LCD, a CRT, an LED or an EL, the audible indicator 17a such as a speaker and the accommodation section indication lamp 15a for indication by means of an LED or a lamp at an upper portion of the accommodation section 15, respectively.

The information transmission means 5 supplies the display signal Ds to the display unit 17.

The information transmission means 5 supplies the sound signal Ss to the audible indicator 17a.

The information transmission means 5 supplies the flickering signal Fs to the accommodation section indication lamp 15a.

The information recognition means 4 reads also data of the history of use of the battery 7 stored in storage means 7A in the battery.

Further, the unmanned automatic battery rental apparatus 1 includes terminal connectors (not shown) and effects measurement of an electric characteristic and charging of a battery 7.

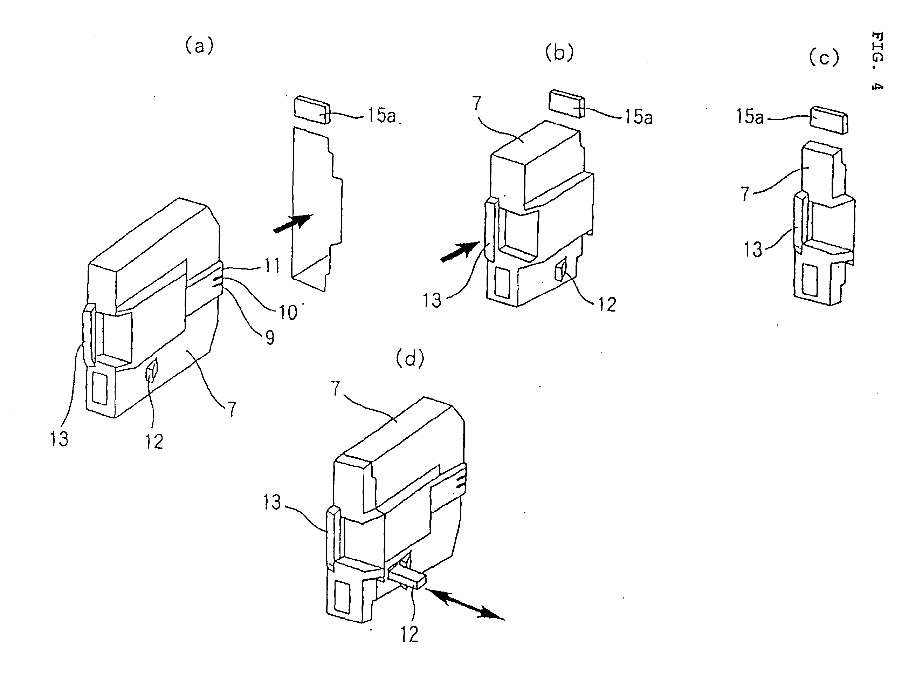

The information recognition means 4 measures a battery remaining amount and so forth from the terminal connectors corresponding to terminals 9, 10 and 11 (refer to FIG. 4) of the battery 7 and obtains a battery signal Ib, and performs processing necessary for charging corresponding to the battery signal Ib in accordance with a charge signal Cb from the terminal connectors corresponding to the terminals 9, 11 of the battery 7.

The information recognition means 4 acquires unique information of the battery 7 such as the battery temperature and the stored information of the storage means 7A also from the battery signal Ib.

The information recognition means 4 supplies the unique information read from the battery 7 as the information signal Is to the information transmission means 5.

The communication means 19 of the unmanned automatic battery rental apparatus 1 is formed from a bidirectional transmitter such as, for example, a modem composed of a modulation circuit, a clock circuit, a transmission circuit, a photo-coupler and so forth.

The communication means 19 modulates an information signal Mt composed of a read signal Sr from the information recognition means 4 and a battery signal Ib from the information recognition means 4 and supplies, for example, a transmission signal Cs as a pulse signal or the like to the central control apparatus 3 over the communication line 2.

Further, the communication means 19 demodulates a reception signal Bs such as, for example, a pulse signal supplied from the central control apparatus 3 over the communication line 2 and supplies a processing signal Mr to the control means 18.

Based on the processing signal Mr, the information recognition means 4 in the control means 18 supplies a charge signal Cb to the battery 7.

Meanwhile, where the number of times of charging and discharging operations within a predetermined period of time is excessively large, charging of the battery 7 may not be performed, or the rental service of a battery 7 to the user may not be performed.

The central control apparatus 3 receives the transmission signal Cs regarding data of the unmanned automatic battery rental apparatus 1 over the communication line 2 and supplies a reception signal Bs regarding data necessary for the unmanned automatic battery rental apparatus 1 to the unmanned automatic battery rental apparatus 1 over the communication line 2.

The central control apparatus 3 includes a computer and performs centralized control, and effects management of users, rental batteries, the unmanned automatic battery rental apparatus 1, measurement and execution instruction for charging of a battery 7, the battery lives, collection of the toll and so forth.

The central control apparatus 3 performs database management of the rental IDs of users, the identification numbers and the remaining amounts when lent of the lent batteries, the remaining amounts when returned, the used amounts, the addresses, the ages, the telephone numbers, the sexes, the contract account numbers, the numbers of rental times, the tolls and so forth as information of the rental persons.

The central control apparatus 3 performs database management of the batteries such as the sales of batteries, the utilization numbers of times, the numbers of times of charging and discharging operations, the dates and hours of charging, the amounts of charging and discharging, and the lives, the necessity for exchange and so forth from those data.

Further, the central control apparatus 3 manages data of the operating rate and the turnover rate of each unmanned automatic battery rental apparatus 1, the ranges of action of users, and utilization situations, the business deployment in the future and so forth by patterns.

### To Fig. 4.

The battery 7 includes the power supplying positive terminal 9, the terminal 10 for electric measurement, and the power supplying negative terminal 11.

Further, the battery 7 includes a handle 13 for being gripped when the battery 7 is to be pulled out from the accommodation section 15 of an unmanned automatic battery rental apparatus 1, and a lock pin 12 for mechanical locking.

It is to be noted that the terminal 10 for electric measurement may be composed of a plurality of terminals.

The storage means 7A stores the identification number and unique information of the battery 7.

The unique information is composed of data of the return date and hour, the number of times of charging and discharging operations, the rental date and hour (date and hour of lending), the battery temperature, and the battery remaining amount, and so on. The battery identification number is composed of the production number, the production year, month and day, and so forth.

It is to be noted that the unique information may include the battery identification number, and the unique information may include the rental ID.

The unique information of the battery 7 is supplied to an unmanned automatic battery rental apparatus 1 by communication between the information transmission means 5 and the communication means 19 through the terminal 10 for electric measurement.

Measurement of the battery remaining amount or charging is performed using the power supplying positive terminal 9 and the power supplying negative terminal 11.

The battery 7 includes a lock pin 12, and if it is inserted into the returning accommodation section 15 of the unmanned automatic battery rental apparatus 1, then the lock pin 12 is mechanically erected uprightly and the battery 7 is locked.

On the other hand, a battery 7 charged up already can be pulled out readily from an accommodation section 15 by the handle 13 as the lock pin 12 is pushed back by a returning metal member in the accommodation section 15 in response to a cancellation signal of the unmanned automatic battery rental apparatus 1.

FIG. 4(a) is an explanatory view explaining a condition wherein a used battery 7 for returning is inserted into an accommodation section 15 on which the accommodation section indication lamp 15a is flickering.

FIG. 4(b) is an explanatory view explaining an intermediate condition during insertion, which is a condition wherein the lock pin 12 is not projected as shown in FIG. 4(d).

FIG. 4(c) is an explanatory view explaining a condition wherein the used battery 7 for returning is pushed in fully, which is a condition wherein the lock pin 12 is projected and the battery 7 is locked.

A bar code may be applied to a side face of the battery 7 while a bar code reader is provided in the unmanned automatic battery rental apparatus (battery exchanging apparatus) 1 to further add information for identification of the battery 7.

In this manner, in the battery rental system, if the unmanned automatic battery rental apparatus 1 recognizes a user, then it reports a procedure of use and an accommodation section 15 for returning to the user by voice and the display unit 17 by the information transmission means 5 and causes the accommodation section indication lamp 15a at an upper portion of the accommodation section 15 to flicker.

Further, in the battery rental system, if it is confirmed that a used battery 7 for returning is inserted and the lock pin 12 is locked, then the information recognition means 4 recognizes the battery identification number and the battery remaining amount when lent of the used battery 7 for returning, and the battery remaining amount at present is measured from the battery terminals and the electricity rate is reported to the user by voice and the display unit 17.

Further, the battery rental system reports the accommodation section 15 in which a battery 7 charged up already is accommodated to the user by voice and the display unit 17 again and causes the accommodation section indication lamp 15a at an upper portion of the accommodation section 15 to flicker to report it, and unlocks the lock pin 12 of the battery 7 charged up already.

Further, the battery rental system stores the remaining amount when lent of the battery 7 charged up already into the battery 7, stores the battery identification number, the remaining amount when lent, the rental date and hour, the returned day and hour and the toll of the battery, and outputs a message of completion of operation to the user by voice and the display unit again.

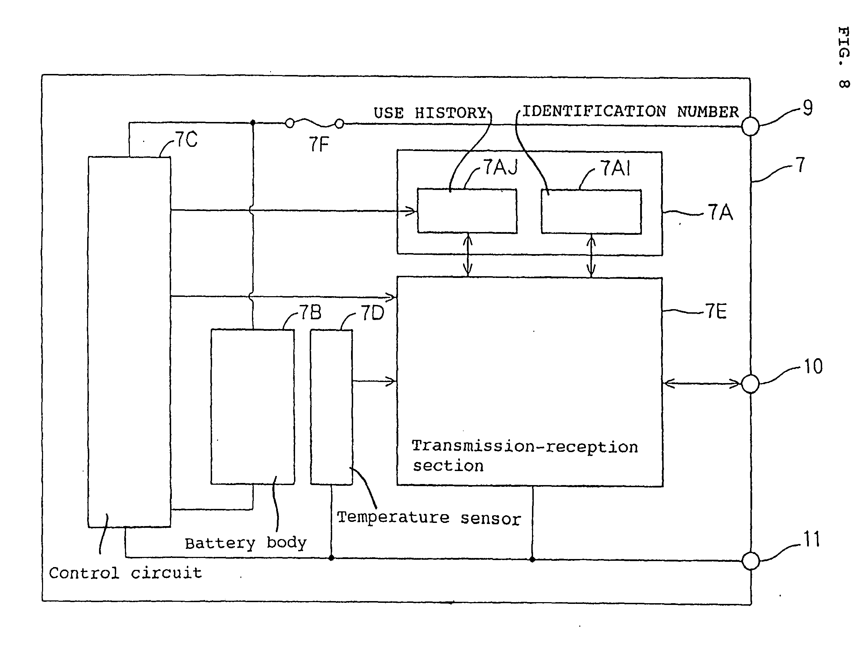

### To Fig. 8.

The battery 7 includes a control circuit 7C, a battery body 7B, a temperature sensor 7D, storage means 7A, a transmission-reception section 7E, and a fuse 7F.

Further, the battery 7 includes a power supplying positive terminal 9, a terminal 10 for electric measurement, and a power supplying negative terminal (grounding terminal) 11.

The power supplying positive terminal 9 is connected to the control circuit 7C and the battery body 7B through the fuse 7F.

The battery body 7B is composed of a nickel-cadmium cell or the like which allows repetitive charging.

The control circuit 7C includes a plurality of LEDs or a bar graph meter, and detects the battery remaining amount of the battery body 7B and displays it by the LEDs or the bar graph meter. Further, the control circuit 7C supplies a remaining amount detection signal representative of the battery remaining amount to the transmission-reception section 7E.

The control circuit 7C detects an abnormal condition of the battery body 7B and supplies an abnormal condition detection signal to the transmission-reception section 7E.

A negative terminal of the battery body 7B is connected to the control circuit 7C and is connected to the power supplying negative terminal 11 through a short-circuiting resistor (shunt resistor) in the control circuit 7C.

The storage means 7A includes a memory 7AJ for storing a use history of the battery 7, and a memory 7AI for storing the battery identification number.

The memory 7AJ may store the return date and hour as the use history, or may store the number of times of charging and discharging operations within a fixed period of time, or may store the rental date and hour (date and hour of lending), or may store them in combination.

The storage means 7A may store unique information (the remaining amount, the remaining amount when lent, the remaining amount at present), the number of times of charging and discharging operations, the number of times of use and so forth) into the memory 7AJ or the memory 7AI.

The control circuit 7C supervises the voltage between the terminals of the battery body 7B, and supplies, if it detects that the battery body 7B has been charged, a charge detection signal representative of a charged up condition to the memory 7AJ. The memory 7AJ stores that the charge detection signal has been received.

The temperature sensor 7D detects the temperature of the battery body 7B and supplies a temperature detection signal representative of the temperature to the transmission-reception section 7E.

The data of the use history and the data of the battery identification number of the storage means 7A can be accessed from the transmission-reception section 7E.

The transmission-reception section 7E transmits data of the use history from the memory 7AJ, data of the battery identification number from the memory 7AI, data based on a failure detection signal and a remaining amount detection signal from the control circuit 7C, data based on a temperature detection signal from the temperature sensor 7D and so forth or stored information of the storage means 7A or the like to the outside of the battery 7 through the terminal 10 for electric measurement.

However, the control circuit 7C may be constructed such that the remaining amount detection signal is not supplied to the transmission-reception section 7E and may be constructed such that the battery remaining amount is detected through the terminal connector by the unmanned automatic battery rental apparatus 1.

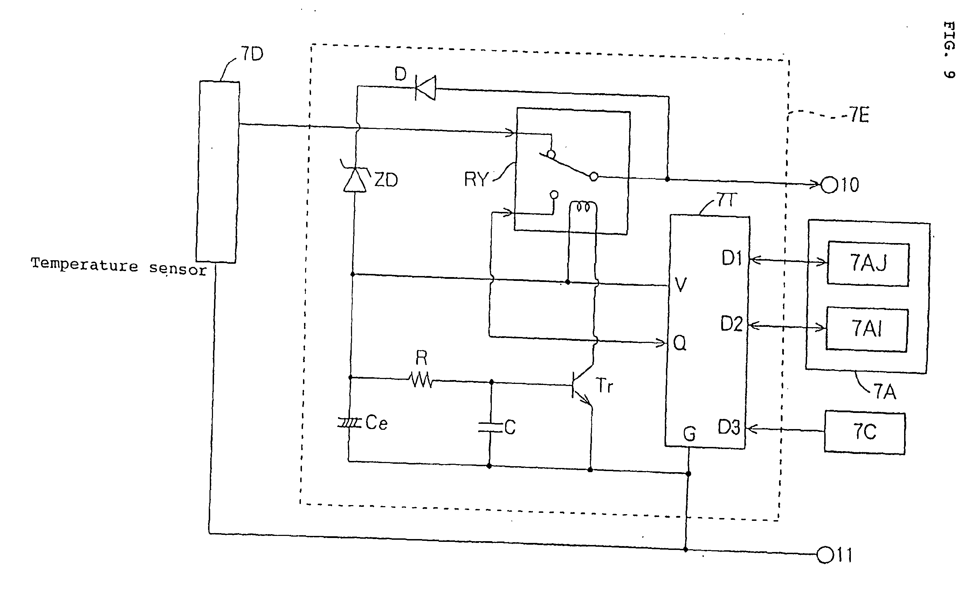

### To Fig. 9.

The transmission-reception section 7E includes a relay RY, a diode D, a Zener diode ZD, a resistor R, an electric field capacitor Ce, a capacitor C, a transistor Tr, and communication means 7T.

A common contact of the relay RY is connected to the terminal 10 for electric measurement, and a break contact of the relay RY is connected to the temperature sensor 7D while a make contact of the relay RY is connected to a Q terminal of the communication means 7T.

An output signal of the temperature sensor 7D is supplied to the terminal 10 for electric measurement.

Meanwhile, if a positive potential higher than a breakdown voltage is applied for only a short period of time from the outside (for example, an unmanned automatic battery rental apparatus 1) to the terminal 10 for electric measurement, then the electric field capacitor Ce is charged and a voltage is applied to a power supply terminal V of the communication means 7T so that the communication means 7T is activated.

By using the electric field capacitor Ce as a power supply to make use of charging and discharging of the same and turning the transistor Tr on only for a predetermined time which depends upon the resistor R and the capacitor C, the relay RY is turned on only for the predetermined period of time.

Consequently, a movable element of the relay RY is moved to disconnect the temperature sensor 7D and the terminal 10 for electric measurement from each other while the terminal 10 for electric measurement and the communication terminal Q of the communication means 7T are connected to each other for the predetermined period of time.

From the terminal 10 for electric measurement, data (or stored information) of the storage means 7A and data from the control circuit 7C (or the control circuit 7C itself) can be accessed for the predetermined period of time through the communication means 7T.

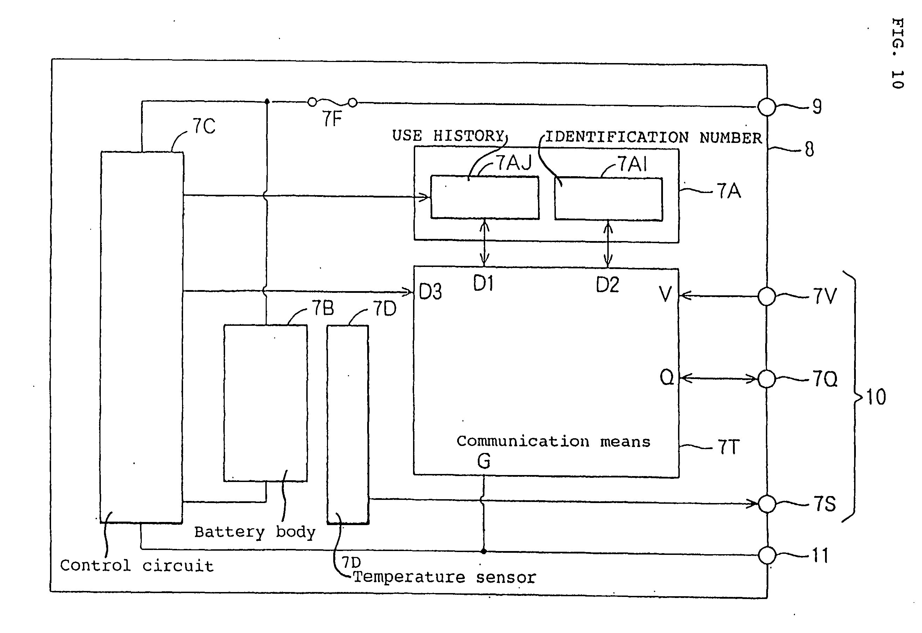

Fig. 10 shows another example of a battery for an electrically-operated vehicle.

This battery 8 includes a control circuit 7C, a battery body 7B, a temperature sensor 7D, storage means 7A, communication means 7T, and a fuse 7F.

Further, the battery 8 includes a power supplying positive terminal 9, a terminal 10 for electric measurement and a power supplying negative terminal (grounding terminal) 11.

The terminal 10 for electric measurement of FIG. 10 is composed of a plurality of terminals and includes a power supplying terminal 7V for the communication means 7T, a terminal 7Q connected to the communication terminal Q of the communication means 7T, and a terminal 7S for outputting a temperature detection signal 7S from the temperature sensor 7D.

The power supplying positive terminal 9 is connected to the control circuit 7C and the battery body 7B through the fuse 7F.

The battery body 7B is formed from a nickel-cadmium cell or the like which allows repetitive charging.

The control circuit 7C includes a plurality of LEDs or a bar graph meter, and detects and indicates the battery remaining amount of the battery body 7B by the LEDs or the bar graph meter and supplies a remaining amount detection signal representative of the battery remaining amount to (a terminal D3 of) the communication means 7T.

The control circuit 7C detects an abnormal condition of the battery body 7B and supplies an abnormal condition detection signal to (the terminal D3 of) the communication means 7T.

The negative terminal of the battery body 7B is connected to the control circuit 7C and connected to the power supplying negative terminal 11 through a short-circuiting resistor (shunt resistor) in the control circuit 7C.

However, the control circuit 7C may be constructed such that it does not supply the remaining amount detection signal to the communication means 7T and may be constructed such that the battery remaining amount is detected through the terminal connector by the unmanned automatic battery rental apparatus 1.

The storage means 7A includes a memory 7AJ for storing a use history of the battery 7, and a memory 7AI for storing the battery identification number.

The memory 7AJ may store, as the use history, the return date and hour, may store the number of times of charging and discharging operations within a fixed period, may store the rental date and hour (date and hour of the lending), or may store them in combination.

The storage means 7A may store also unique information (the remaining amount when lent, the remaining amount at present), the number of times of charging and discharging operations, the number of times of use and so forth) in the memory 7AJ or the memory 7AI.

The control circuit 7C supervises the voltage between the terminals of the battery body 7B, and if it detects that the battery body 7B has been charged, then it supplies a charge detection signal representative of a full charge to the memory 7AJ.

The temperature sensor 7D detects the temperature of the battery body 7B and outputs a temperature detection signal representative of the temperature to the terminal 7S.

The data of the use history and the data of the battery identification number of the storage means 7A can be accessed from the communication means 7T.

The communication means 7T transmits data of the use history from the memory 7AJ, data of the battery identification number from the memory 7AI, data based on a failure detection signal and a remaining amount detection signal from the control circuit 7C, data based on a temperature detection signal from the temperature sensor 7D and so forth or stored information of the storage means 7A to the outside of the battery 7 through (particularly the terminal 7Q and the terminal 7S of) the terminal 10 for electric measurement.

For example, the communication means 7T may be constructed such that it transmits to an unmanned automatic rental apparatus 1 or may be constructed such that it transmits directly to the central control apparatus 3.

The invention provides a battery rental system by which a charging and discharging history of a battery for rental can be controlled and maintenance of a battery can be performed appropriately.

To achieve this, a battery rental system which includes batteries 7 for rental, an unmanned automatic battery rental apparatus (battery exchanging apparatus) 1 in which the batteries 7 for rental are accommodated, and a central control apparatus 3 which effects centralized control of the unmanned automatic battery rental apparatus 1 over a communication line 2.

## Claims

1. A battery rental system for exchanging a returnable battery (7) carried on an electrically operated vehicle and a charged battery,
comprising batteries (7) for rental, a battery exchanging apparatus (1), and a central control apparatus (3) for controlling said battery exchanging apparatus (1) over a communication line (2);
each of said batteries (7) includes a readable and writable storage element (7A) built therein storing a rental identification number of the user and a used amount, and a communication means (7T) for transmitting the information stored in said storage element (7A) of the returned battery to said battery exchanging apparatus (1) through a terminal (10) for electric measurement;
said battery exchanging apparatus (1) being adapted for supplying driving power to said communication means (7T) to effect communication, reading said rental identification number of the user prior to detecting a used amount of a returned battery for rental, and lending a charged battery;
said batteries (7) or said battery exchanging apparatus (1) transmits the stored rental identification number of the user and the used amount of the returned battery and of the lent battery to said central control apparatus (3); and
said central control apparatus (3) stores the transmitted information as information of a rental person;
**characterized in that**
said storage element (7A) of each of said batteries (7) stores the identification number of the battery; and
said battery exchanging apparatus (1) being adapted for reading and checking said identification number of the battery (7) prior to detection of the used amount, and
that each of said batteries (7) includes a temperature sensor (7D) for detecting a temperature of the battery, and change-over means (RY) for changing over between outputting an output signal of said temperature sensor (7D) and outputting an output signal of said communication means (7T) to the terminal (10) for electric measurement,
wherein each of the batteries (7) includes an electric field capacitor (Ce),
wherein if a positive potential higher than a breakdown voltage is applied for a short period of time from the battery rental apparatus (1) to the terminal (10) for electric measurement, the electric field capacitor (Ce) is charged, a movable element of the change-over means (RY) is moved to disconnect the temperature sensor (7D) and the terminal (10) for electric measurement from each other while the terminal (10) for electric measurement and the communication means (7T) are connected to each other for a predetermined period of time, so that a voltage is applied to a power supply terminal (V) of the communication means (7T), and the communication means (7T) is activated, so that from the terminal (10) for electric measurement, data of the identification numbers of the battery (7) and of the user stored in the storage element (7A) can be accessed for the predetermined period of time through the communication means (7T).

## Patentansprüche

1. Batterievermietungssystem zum Austauschen einer rückgebbaren Batterie (7), die an einem elektrisch betriebenen Fahrzeug angebracht ist, und einer geladenen Batterie,
umfassend zu vermietende Batterien (7), eine Batterieaustauschvorrichtung (1) sowie eine zentrale Steuerungsvorrichtung (3) zum Steuern der Batterieaustauschvorrichtung (1) über eine Kommunikationsleitung (2);
wobei jede der Batterien (7) ein eingebautes auslesbares und beschreibbares Speicherelement (7A), das eine Vermietungsidentifikationsnummer des Benutzers und einen genutzten Betrag speichert, sowie ein Kommunikationsmittel (7T) zum Übertragen der in dem Speicherelement (7A) der rückgegebenen Batterien gespeicherten Information zu der Batterieaustauschvorrichtung (1) durch einen elektrischen Messanschluss (10) enthält;
wobei die Batterieaustauschvorrichtung (1) dazu ausgelegt ist, dem Kommunikationsmittel (7T) Antriebsenergie zuzuführen, um die Kommunikation zu bewirken, vor der Erfassung eines genutzten Betrags einer zurückgegebenen zu vermietenden Batterie die Vermietungsidentifikationsnummer des Benutzers zu lesen und eine geladene Batterie auszuleihen;
wobei die Batterien (7) oder die Batterieaustauschvorrichtung (1) die gespeicherte Vermietungsidentifikationsnummer des Benutzers und den genutzten Betrag der zurückgegebenen Batterie und der ausgeliehenen Batterie zu der zentralen Steuervorrichtung (3) überträgt; und
die zentrale Steuervorrichtung (3) die übertragene Information als Information einer Vermietungsperson speichert;
**dadurch gekennzeichnet, dass** das Speicherelement (7A) jeder der Batterien (7) die Identifikationsnummer der Batterie speichert; und
die Batterieaustauschvorrichtung (7) dazu ausgelegt ist, vor der Erfassung des genutzten Betrags die Identifikationsnummer der Batterie (7) zu lesen und zu prüfen, und
dass jede der Batterien (7) einen Temperatursensor (7D) zum Erfassen einer Temperatur der Batterie sowie ein Umschaltmittel (RY) zum Umschalten zwischen der Ausgabe eines Ausgangssignals des Temperatursensors (7D) und der Ausgabe eines Ausgangssignals des Kommunikationsmittels (7T) zu dem elektrischen Messanschluss (10) enthält,
worin jede der Batterien (7) einen elektrischen Feldkondensator (CE) enthält,
worin dann, wenn für eine kurze Zeitdauer von der Batterievermietungsvorrichtung (1) an den elektrischen Messanschluss (10) ein positives Potenzial angelegt wird, das höher als eine Durchbruchspannung ist, der elektrische Feldkondensator (CE) geladen wird, ein bewegbares Element des Umschaltmittels (RY) bewegt wird, um den Temperatursensor (7D) und den elektrischen Messanschluss (10) voneinander zu trennen, während der elektrische Messanschluss (10) und das Kommunikationsmittel (7T) für eine vorbestimmte Zeitdauer miteinander verbunden werden, sodass an einen Stromversorgungsanschluss (V) des Kommunikationsmittels (7T) eine Spannung angelegt wird und das Kommunikationsmittel (7T) aktiviert wird, sodass das Kommunikationsmittel (7T) für die vorbestimmte Zeitdauer von dem elektrischen Messanschluss (10) auf in dem Speicherelement (7A) gespeicherte Daten der Identifikationsnummern der Batterie (7) und des Benutzers zugreifen kann.

## Revendications

1. Système de location de batterie pour échanger une batterie consignée (7) portée dans un véhicule actionné électriquement contre une batterie chargée,
comprenant des batteries (7) de location, un dispositif d'échange de batteries (1) ; et
un dispositif de commande central (3) pour commander ledit dispositif d'échange de batteries (1) sur une ligne de communication (2) ;
où chacune desdites batteries (7) comprend, intégré en elle, un élément de mémorisation (7A), dans lequel il est possible de lire et d'écrire, mémorisant un numéro d'identification de location de l'utilisateur et une quantité utilisée, et des moyens de communication (7T) pour transmettre les informations mémorisées dans ledit élément de mémorisation (7A) de la batterie ramenée audit dispositif d'échange de batteries (1) par l'intermédiaire d'une borne (10) pour une mesure électrique ;
ledit dispositif d'échange de batteries (1) étant adapté pour délivrer une énergie de commande auxdits moyens de communication (7T) pour effectuer une communication, lire ledit numéro d'identification de location de l'utilisateur avant de détecter une quantité utilisée d'une batterie de location ramenée, et prêter une batterie chargée ;
lesdites batteries (7) ou ledit dispositif d'échange de batteries (1) transmettent le numéro d'identification de location mémorisé de l'utilisateur et la quantité utilisée de la batterie ramenée et de la batterie prêtée audit dispositif de commande central (3) ; et
ledit dispositif de commande central (3) mémorise les informations transmises en tant qu'informations d'une personne effectuant la location ;
**caractérisé en ce que**
ledit élément de mémorisation (7A) de chacune desdites batteries (7) mémorise le numéro d'identification de la batterie ; et
ledit dispositif d'échange de batteries (1) est adapté pour lire et vérifier ledit numéro d'identification de la batterie (7) avant de détecter la quantité utilisée, et
**en ce que** chacune desdites batteries (7) comprend un capteur de température (7D) pour détecter une température de la batterie, et des moyens de commutation (RY) pour commuter entre la sortie d'un signal de sortie dudit capteur de température (7D) et la sortie d'un signal de sortie desdits moyens de communication (7T) à la borne (10) pour une mesure électrique,
dans lequel chacune des batteries (7) comprend un condensateur de champ électrique (Ce),
dans lequel, si un potentiel positif supérieur à une tension de claquage est appliqué pendant une courte période de temps par le dispositif de location de batterie (1) à la borne (10) pour une mesure électrique, le condensateur de champ électrique (Ce) est chargé, un élément mobile des moyens de commutation (RY) est déplacé pour déconnecter le capteur de température (7D) et la borne (10) pour une mesure électrique l'un de l'autre tandis que la borne (10) pour une mesure électrique et les moyens de communication (7T) sont connectés les uns aux autres pendant une période prédéterminée, de sorte qu'une tension soit appliquée à une borne d'alimentation (V) des moyens de communication (7T), et les moyens de communication (7T) sont activés, de sorte qu'il soit possible, à partir de la borne (10) pour une mesure électrique, d'accéder à des données des numéros d'identification de la batterie (7) et de l'utilisateur mémorisées dans l'élément de mémorisation (7A) pendant la période de temps prédéterminée par l'intermédiaire des moyens de communication (7T).
